# EUROPEAN PATENT APPLICATION

(11) **EP 1 363 254 A2**
(43) Date of publication of application: **19.11.2003**
(21) Application number: 03010294.1
(22) Date of filing: 07.05.2003
(51) Int. Cl.: G07F 17/42

(54) **An identifier-based information processing system and method for accessing an on-line ticket database**

(30) Priority: 13.05.2002 JP 2002137342
(71) Applicant: Hewlett-Packard Company, Palo Alto, CA 94304 (US); NTT DoCoMo, Inc., Tokyo 100-6150 (JP)
(72) Inventor: Shimizu, Hidenori, c/o Hewlett-Packard Japan Ltd., Tokyo 168-8585 (JP); Sugahara, Taro, c/o Hewlett-Packard Japan Ltd., Tokyo 168-8585 (JP); Ukai, Fumitoshi, c/o Hewlett-Packard Japan Ltd., Tokyo 168-8585 (JP); Bouno, Hironori, c/o Hewlett-Packard Japan Ltd., Tokyo 168-8585 (JP); Yuasa, Kei, c/o Hewlett-Packard Japan Ltd., Tokyo 168-8585 (JP); McEachern, Marc, c/o Hewlett-Packard Japan Ltd., Tokyo 168-8585 (JP); Nakagawa, Shinya, c/o Hewlett-Packard Japan Ltd., Tokyo 168-8585 (JP); Machida, Motohiro, c/o NTT DoCoMo, Inc., Chiyoda-ku, Tokyo 100-6150 (JP); Iso, Toshiki, c/o NTT DoCoMo, Inc., Chiyoda-ku, Tokyo 100-6150 (JP); Katagiri, Masaji, c/o NTT DoCoMo, Inc., Chiyoda-ku, Tokyo 100-6150 (JP); Sugimura, Toshiaki, c/o NTT DoCoMo, Inc., Chiyoda-ku, Tokyo 100-6150 (JP)
(74) Representative: Rupp, Christian, Dipl.Phys.

(57) **Abstract**

A system is provided for printing data with an output device installed at a remote location such as an office where a user occasionally visits. The system comprises an information ticket database for storing one or more information tickets that can be retrieved using an identifier of an object as a search key. The system also includes a service portal that searches the information ticket database to provide service information to a user in response to the identifier transmitted from a user's mobile device through the Internet. The database stores, for each of output devices registered in the system, an access-information ticket containing information for accessing the output device. The service portal searches the database to retrieve the ticket of the output device identified by the identifier transmitted from the user's mobile device and outputs the data specified by the mobile device onto the output device according to the information obtained from the ticket.

## Description

### BACKGROUND OF THE INVENTION

The present invention relates to an information processing system for outputting data associated with an object onto an output device through the use of identifiers assigned to both the object and the output device, and more particularly, it relates to an information processing system that utilizes identifiers that are assigned to both the object and the output device and read by a mobile device as as a mobile terminal (PDA) and a cell phone.
An output device such as a printer and a projector is usually connected to an intra-company network (e.g., LAN) for outputting the data transmitted over the LAN from a personal computer or any other terminal connected to the LAN. In order to output the data onto such an output device, it is required to send certain commands from a terminal that is connected to the same LAN as the output device of interest.
In recent years, users of mobile devices such as mobile terminals (PDA), cell phones and portable notebook-type personal computers have been increasing. The mobile devices cannot use an output device that is installed at a remote office or site where a user happens to visit because the mobile device is not registered with the LAN at the remote office or site.
Therefore, there exists a need for a system in which a user can use his or her mobile device to output the data onto an output device located at a office, a store or the like he or she happens to visit.

### SUMMARY OF THE INVENTION

The system according to one aspect of the invention comprises an information ticket database for storing, for each object, one or more information tickets, an identifier of the object being a key to the information tickets. The system also includes a service portal that searches the information ticket database so as to provide service information to a user in response to the identifier transmitted from a user's mobile device through the Internet. The information ticket database stores, for each of output devices registered in the information processing system, an access-information ticket, related to the information for accessing the output device, which uses an identifier of the output device as a key. The service portal is configured to search the information ticket database to retrieve an access-information ticket of the output device corresponding to the received identifier in response to reception of the identifier of the output device transmitted from the user's mobile device. The service portal outputs the data specified by the mobile device onto the output device according to the information gained from the retrieved ticket.
According to one aspect of the invention, as long as a certain output device is registered in the service portal over the Internet, the data from any mobile device can be outputted onto the output device through access management based on the information available from the access-information ticket.

According to another aspect of the invention, the service portal has a function of searching the information ticket database in response to reception of the identifier of the object transmitted from the user's mobile device. The service portal advises the user's mobile device of available object's data that the service portal can provide. In addition, the service portal, in response to reception of the identifier of the output device transmitted from the user's mobile device, searches the information ticket database to retrieve the access-information ticket of the output device corresponding to the identifier. The service portal outputs the object's data onto the output device according to the information gained from the retrieved ticket.
According to this aspect of the invention, it is possible to output the data relating to an object that has an identifier onto any output device under the control with the access-information ticket.

According to a further aspect of the invention, said access-information ticket contains location information of an access gateway for the related output device and said service portal is programmed to access the access gateway so as to assure that the user is authorized to access the output device.
According to yet another aspect of the invention, the information ticket contains a pointer to a related content service. The service portal is programmed to access one or more content services to obtain the data indicating the type of the available object's data and transmit the obtained data to the user's mobile device.
According to yet another aspect of the invention, the service portal is configured to transmit an instruction to the content service for requesting the content service to transmit the object's data to the access gateway in response to reception of an output request from the user's mobile device for one of the object's data.
According to yet another aspect of the invention, said content service is configured to transmit the specified object's data to the specified access gateway in response to the received instruction.

### BRIEF DESCRIPTION OF THE DRAWINGS

Figure 1 is a block diagram showing an overall structure of a UOI system as a base of the present invention.
Figure 2 schematically illustrates a format of an information ticket.
Figure 3 schematically illustrates a series of screens in a mobile device in the system shown in Figure 1.
Figure 4 is a block diagram of an overall structure of one embodiment of the present invention.
Figure 5 is a flowchart of a communication in one embodiment of the present invention.

### DESCRIPTION OF THE PREFERRED EMBODIMENTS

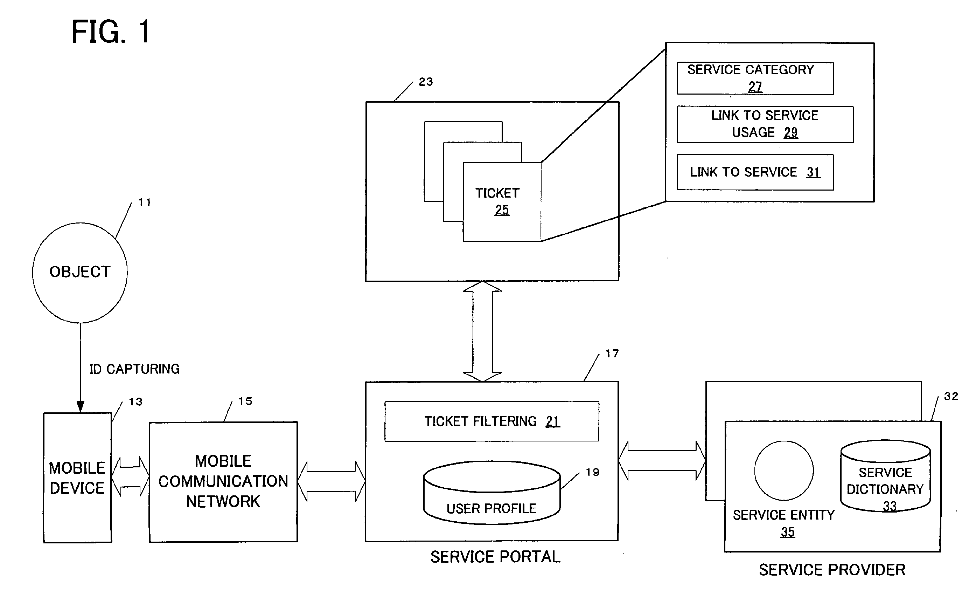

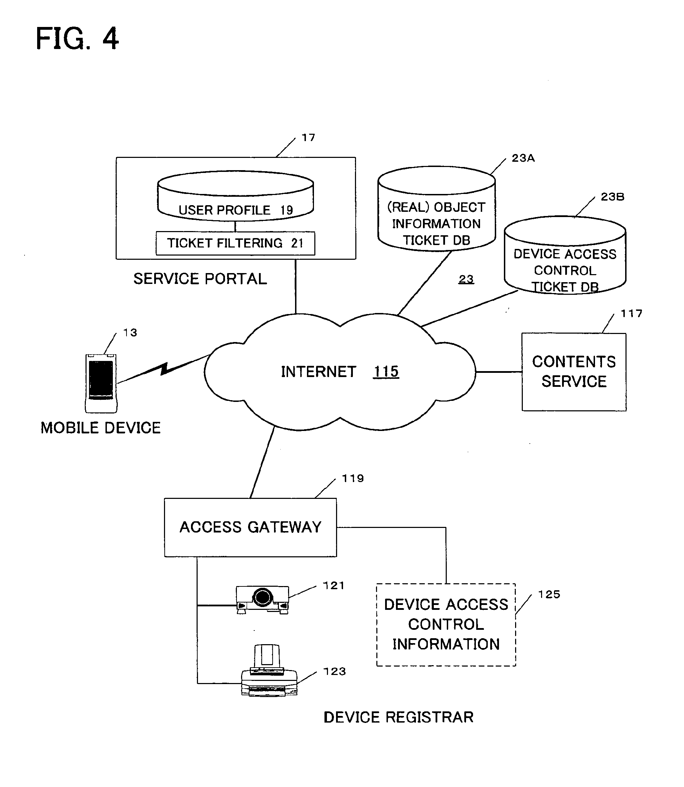

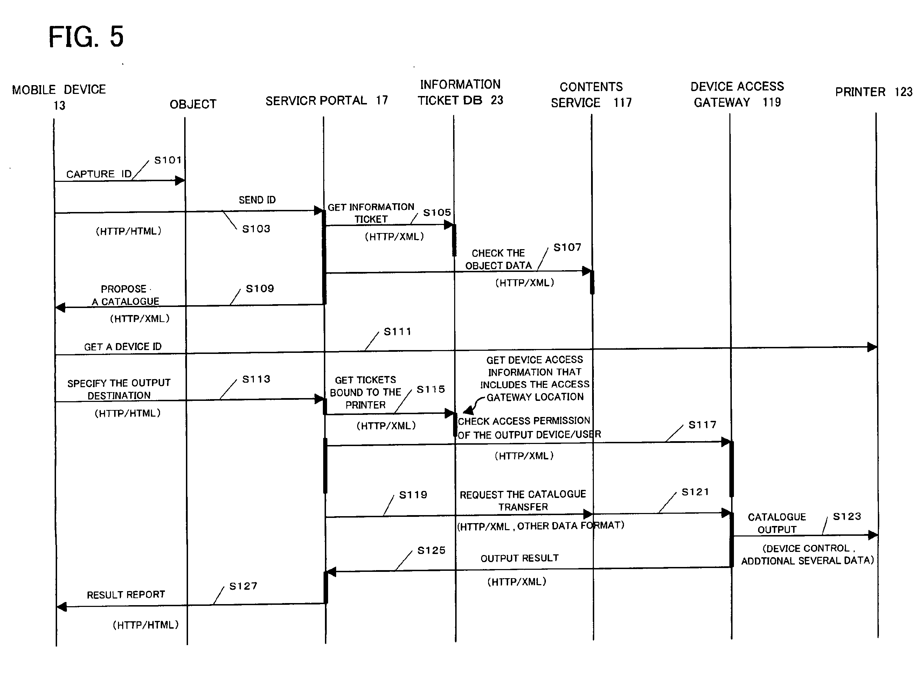

With reference to the accompanying drawings, embodiments of the present invention will be described. Figure 1 is a block diagram illustrating an information service system using information tickets 25 on which the present invention is based. Details of the information service system can be seen in the Japanese Patent Application No. 2002-109629 assigned to the co-applicant of this patent application.
Recently, many commodities are assigned respective idenfitiers (IDs) for use with sale management, inventory control and so on. The ID is typically printed on a label of the commodity in a barcode format. Although the object to which a certain ID is assigned is usually physical, or tangible object, it may sometimes be a virtual, or intangible object. Therefore, the term "object" in this specification refers to any object, either tangible or intangible, to which an ID can be assigned. Besides, an ID that is assigned uniquely to a certain object is hereinafter referred to as a "Unique Object Identifier" (UOI).
A service portal 17 is provided with a user profile database 19 in which the profiles of the users who use the information service system are stored. An information ticket database 23 stores information tickets 25 that can be retrieved using respective UOIs as search keys. Each of the information tickets 25 contains link information 31 indicating appropriate links to service providers 32 which provide respective services about the object identified by the UOI. This link information 31 typically contains the URL of the page of a Web site which is an entry to the particular service provided by each of the service providers.
The information ticket includes service category description 27 and link to service usage 29. The service usage includes description of the communication protocol required for using the particular service provided by a service provider 32. This service usage is contained in a service dictionary 33 of a service provider 32. A link 29 to such service usage is embedded in each information ticket 25.

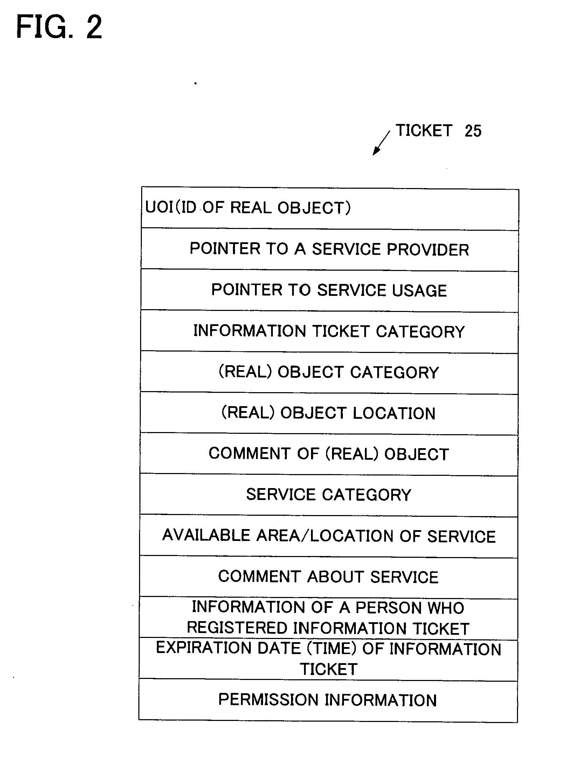

Figure 2 is an exemplary format of the information ticket. The first field contains a UOI, the second field a pointer to a service provider and the third filed a pointer to service usage. Alternatively, the third field may directly contain the service usage itself. The forth and subsequent fields may include information useful for a user to select an information ticket suitable to the user. For example, the "object location" and the "available area/location of service" may be used to look up the address or the business location of the user contained in the user profile.
The service usage shown by the pointer thereto indicates a service usage type such as accessing a Web page, an automatic telephone answer and so on. According to another embodiment, the service usage may include description of, for example, a scheme of a remote procedure call, a name of a procedure (procedure or function), the number of arguments and/or argument type, a type of returned value, explanation of the effect of executing a procedure (for example, the sum of the first and second arguments will be returned) and so on.
A user may read a UOI attached to an object in a barcode form by the use of a barcode reader into a mobile device 13 so as to transmit it to a service portal 17 via a communication network 15. In one embodiment of the system, the user is registered with the service portal 17 beforehand, so that user profile including such information as gender, age, address, business location, taste and so on is stored in the user profile database 19. In this case, when the user accesses the service portal 17, the user's ID and password are transmitted to the service portal 17.
In response to the user's ID and password transmitted from the user, the service portal 17 retrieves the user profile corresponding to the user ID from the user profile database 19 and also retrieves at least one information ticket 25 corresponding to this UOI from the information ticket database 23. The database 23 may be located within the service portal 17, or alternatively the service portal 17 may communicate with the database 23 over the network when the database is located at a different location. When there are multiple information tickets 25 for one UOI, all corresponding information tickets are retrieved.
A ticket filtering unit 21 checks those multiple information tickets 25 with the user profile of the user so as to select one information ticket appropriate to the user. When selecting the information ticket appropriate to the user, the ticket filtering unit 21 verifies whether or not the service usage type of the service provider 32 indicted on the information ticket 25 can fit with the mobile device 13 of the user.
After the information ticket 25 appropriate to the user has been selected, the service portal 17 uses a link to the service contained in that information ticket 25 to connect the user's mobile device 13 to a service entity 35 of the service provider 32. Since a link to the URL of the particular page of the Web site of the service provider 32 is typically embedded in the information ticket 25, the page of such URL is transmitted to the mobile device 13.

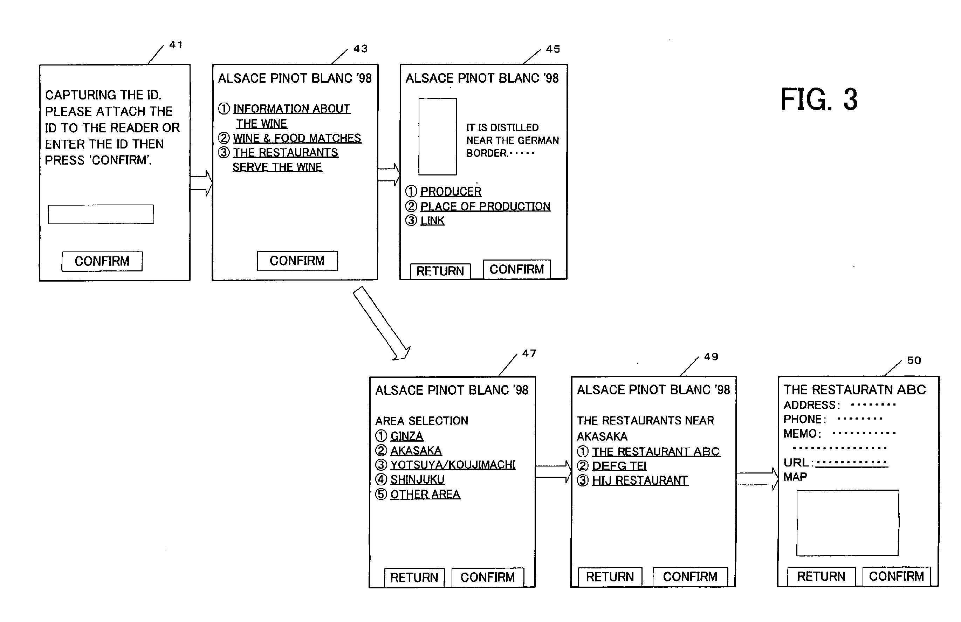

Figure 3 shows an example of the information to be displayed in the screen of the mobile device 13. Now, assume a case in which a user reads a barcode of a label attached on a bottle of wine by use of a barcode reader. When the user operates the user's mobile device 13 to select a UOI-reading mode in accordance with the system, such screen as shown in a frame 41 is displayed. When the user reads the barcode of the label through the barcode reader connected to the mobile device, the UOI is displayed in a rectangular frame within the frame 41. When the user depresses a decision button, the ID is transmitted to the service portal 17. The service portal 17 selects an information ticket 25 which is the most suitable for the user according to the above-described procedure and connects the user to a Web page, that is, a service entity 35 of the service provider 32 linked to that information ticket.
In such a way, a screen 43 of Figure 3, which is a Web page of the service provider 32, is displayed in the user's mobile device 13. This Web page is a page that has been prepared in advance by the service provider 32 relative to the UOI of the wine. As the service entity 35 has certain functions for a usual Web site, it provides a number of screens (pages) in a hierarchical structure in accordance with the user selection as illustrated in the screens 43, 45, 47, 49, 50 in Figure 3.
Now, with reference to Figure 4, one embodiment of the present invention will be described. The system is based on the UOI system shown in Figure 1. The same reference numbers as those in Figure 1 are used for the components in Figure 4 that are same as those in Figure 1. A projector 121 and a printer 123 connected to an intra-company LAN are connected to the Internet 115 through an access gateway 119. The access gateway 119 checks the communications directed to the access gateway 119 from the Internet 115. The gateway rejects the communications that are not authorized to access the intra-company system and accepts the communications that are authorized to access the intra-company system.
The access gateway 119 converts the communication protocol of the Internet 115 into a protocol of the intra-company system. As for the access gateway 119, there is provided a file 125 for storing device access control information for the devices that are controlled by the access gateway 119.
The information ticket database 23 comprises an object information ticket database 23A and a device access control ticket database 23B. These databases may be integrated into a single database. The object information ticket database 23A stores object information tickets as above described with reference to Figure 1.
The device access control ticket database 23B stores device access control tickets relative to the output devices, including the projector 121 and the printer 123, which are registered with the system. The format of the device access control ticket is the same as the ticket 25 shown in Figure 2. Namely, the first field includes a unique identifier for the respective devices and the field of "pointer to a service provider" includes a pointer to the access gateway 119. The pointer to the access gateway 119 is typically the URL or the IP address of the access gateway. According to this embodiment, the field of "pointer to service usage" includes the description about the service protocol of the concerned device. This description can be written, for example, using the XML language. As an alternative to inclusion of such description in the information ticket, the "pointer to service usage" field may include as a pointer a URL indicating the place where such description can be found. In this case, the service portal accesses the URL indicated by the pointer to retrieve the description of the service protocol.
Besides, this device access control ticket can be used when the identity of the sender of the communication (e.g., the service portal in this example) is confirmed with the authentication scheme specified by the access gateway 119. In this case, the URL of the authenticator and/or the authentication scheme may be contained in the device access control ticket. Thus, access can be established to a service of a contract basis that incurs billing of charges for the use of the service and that requires authentication.
As a result, it becomes possible to utilize the access gateway 119 as a resource for services on a general commercial basis.
A content service 117, which is one embodiment of the service provider 32 shown in Figure 1, provides informational contents related to the object.
One embodiment of the present invention will now be described with reference to Figure 5 illustrating one exemplary case. Assume that a user of a mobile device 13 is interested in an ID on a label of a wine bottle the user found at a visiting site. The user desires to print out the ID onto a printer 123 located in an office at the visiting site. The user activates the program of the UOI system using the mobile device 13 to captures the identifier of the wine with the barcode reader connected to the mobile device (S101). The user clicks on a transmission button of the mobile device 13 to transmit the ID of the wine to a service portal 17 (S103).
In response, the service portal 17 retrieves an object information ticket corresponding to the ID from the object information ticket database 23A that is suited for the user (S105). When there are multiple object information tickets associated with the ID, the ticket filtering unit 21 reads the user profile from the user profile database 19 and checks the contents of the multiple information tickets with the retrieved user profile so as to select the object information ticket that is most appropriate to the user. The service portal 17 accesses the content service with the URL indicated in the "pointer to a service provider" field of such selected object information ticket so as to ascertain available object's data (S107).
In this example, assuming that a catalog is available for the wine, the service portal 17 informs the user's mobile device 13 that a catalog is available (S109).
When the user depresses a function key of the mobile device 13 on which a print function is pre-allocated, the same screen as the screen 41 of Figure 3 is displayed in the mobile device 13. The user reads an identifier of the printer 123 by the use of the barcode reader that is connected to the mobile device 13 (S111). When a decision button of the mobile device 13 is depressed, the identifier of the printer 123 is transmitted to the service portal 17 (S113). In response, the service portal 17 searches the device access control ticket database 23B using the received identifier as a key to retrieve the device access control ticket related with the printer 123 (S115). The IP address of the access gateway 119 is contained in the "pointer to a service provider" field of this information ticket.
The service portal 17 accesses the access gateway 119 in order to determine whether or not this user is authorized to access the printer 123 (S117). The access authorization can be set in accordance with the employee types, for example, whether or not the user belongs to the specific department of the company or the user is an employee of the specific affiliated company and so on. The access authorization is stored in a file for device access operational information. The determination of access authorization may be performed in a manner such that the service portal 17 transmits the user ID for the UOI system to the access gateway 119, which in turn checks the ID with the device access control information. Or, it may be performed such that the access gateway 119 transmits the device access operational information for the printer 123 to the service portal 17, which checks the user's ID with the access authorization information.
The device access operational information typically includes IDs of the users of the UOI system who are authorized to access the printer 123 through the UOI system. Thus, the access gateway 119 or the service portal may determine if a user is authorized to access by collating the user ID.
When it is determined that the user has the access authorization for the printer 123, the service portal 17 sends a request to the content service 117 to transmit the catalog of the wine to the access gateway 119 (S119). In response, the content service 117 transmits the file of the requested catalog to the access gateway 119 (S121). Thus, the access gateway 119 may print the catalog with the printer 123 (S123).
When the printout completes, the access gateway 119 transmits a notice of print completion to the service portal 17 (S125), which informs the user's mobile device 13 of the printout completion (S127).
Although the present invention has been described with reference to the specific embodiments, the present invention is not intended to be limited to those specific embodiments.

## Claims

1. An identifier-based information processing system, comprising:
a ticket database (23) for storing one or more access-information tickets (25) containing information for accessing at least one output device registered with the information processing system; and
a service portal (17), responsive to receipt of an identifier for an output device transmitted from a user via the Internet, for retrieving from the ticket database (23) a ticket (25) containing access-information for the output device, said service portal (17) connecting the user to said output device based on the information included in the retrieved ticket.

2. The system of claim 1, further comprising a device access gateway provided between the Internet and an intra-company network to which said output device is connected, said service portal (17) communicating with the device access gateway to determine if the user is authorized to access the output device.

3. The system of claim 2, wherein said ticket database includes information tickets for objects and wherein said service portal (17), responsive to receipt of an identifier for an object transmitted from the user, searching the ticket database (23) and providing service information to the user.

4. The system of claim 3, wherein the service portal makes a service content selected by the user transmitted to the output device according to the information included in the retrieved access-information ticket (25).

5. The system of claim 4, wherein the information tickets for objects contain one or more pointers to one or more content services, and wherein the service portal (17) is configured to access said one or more content services to obtain data indicating a type of available service and to transmit the obtained data to the user.

6. A method of outputting data at a visiting place, comprising the steps of:
storing in a ticket database (23) one or more access-information tickets containing information for accessing at least one output device connected to a network;
a user mobile terminal (13) transmitting to a service portal (17) an identifier of an output device located at the visiting place;
said service portal (17), responsive to receipt of the identifier, retrieving from the ticket database an access-information ticket associated with the identifier.

7. The method of claim 6, further including a step of said service portal communicating with a device access gateway provided between the Internet (15) and an intra-company network to which said output device is connected, for determining if the user is authorized to use the output device.

8. The method of claim 7, further comprising the steps of:
storing in the ticket database (23) one or more information tickets associated with one or more objects;
said user mobile terminal (13) capturing an ID of an object and sending the ID to the service portal; and
the service portal (17), responsive to receipt of the ID, retrieving an information ticket associated with the ID from the ticket database.

9. The method of claim 8, further comprising the steps of:
said service portal (17) informing the user of available data relative to said object.

10. The method of claim 9, wherein said user mobile terminal captures said identifier of the output device at the visiting place for transmission to the service portal (17).

11. The method of claim 10, further comprising the steps of said user mobile terminal requesting said service portal (17) to output at least one of said available data to said output device based on the access-information included in the retrieved access-information ticket (25).

12. The method of claim 11, wherein the service portal communicates with an access gateway associated with said output device to determine whether the user is authorized to access the output device.

13. The method of claim 12, wherein the service portal request a content service to transmit said at least one of said available data to the access gateway for output to said output device.
